# EUROPÄISCHE PATENTANMELDUNG

(11) **EP 1 759 976 A1**
(43) Veröffentlichungstag der Anmeldung: **07.03.2007**
(21) Anmeldenummer: 05018932.3
(22) Anmeldetag: 31.08.2005
(51) Int. Cl.: B62K 21/16

(54) **Verstellbare Montageeinrichtung für einen Fahrradlenker**

(71) Anmelder: BMC Trading AG, 2540 Grenchen (CH)
(72) Erfinder: Singenberger, Rolf, 1040 Echallens (CH); Wehrli, Marc, 4143 Dornach (CH); Gasser, Reto, 3323 Bäriswil (CH)
(74) Vertreter: Werner, André

(57) **Zusammenfassung**

Der Vorbau für eine Fahrradgabel zur Aufnahme eines Fahrradlenkers umfasst eine in einem Halteorgan (4) vorgesehenen Queröffnung (40) zur Aufnahme des Fahrradlenkers (2). Das Halteorgan (4) ist in einem Aufnahmeteil (3) um eine Drehachse (D) drehbar gelagert. Die Queröffnung (40) ist bezüglich der Drehachse (D) exzentrisch angeordnet. Ferner sind am Vorbau Mittel zur Fixierung des Halteorgans (4) bezüglich des Aufnahmeteils (3) vorgesehen.

## Beschreibung

Die vorliegende Erfindung betrifft einen Vorbau für eine Fahrradgabel zur Aufnahme eines Lenkers nach dem Oberbegriff von Anspruch 1.

Verstellbare Lenkerhalter, mit denen sich die Position des Lenkers an individuelle Sitzpositionen anpassen lassen, sind in vielfacher Konstruktion am Markt bekannt. Der Zweck des Vorbaus ist es, den Lenker resp. die Lenkstange mit der Gabel des Fahrrades zu verbinden.

In einer einfachsten Ausführung weist der Gabelkopf an seinem oberen Ende eine Haltevorrichtung oder Vorbau auf, mit welcher der Mittelteil der Lenkstange verbunden wird. Dabei ist die Position des Mittelteils der Lenkstange gegenüber der Haltevorrichtung resp. des Gabelkopfes entsprechend der Formgebung der Haltevorrichtung vorgegeben und nicht veränder- oder einstellbar.

Eine Höhenverstellung des Lenkers wird bei bekannten Konstruktionen dadurch erzielt, dass die Haltevorrichtung an der Spitze einer in der Gabel teleskopartig angeordneten Stange angeordnet ist. Diese Stange wird mittels einer an der Gabel angeordneten Klemmeinrichtung in der gewünschten Position fixiert. Derartige Klemmeinrichtungen eigenen sich insbesondere für den Einsatz in Metallrahmen, da diese dort einfach integriert und problemlos kraftschlüssig verbunden werden können. Für Kunststöffrahmen eignet sich eine derartige Klemmeinrichtung weniger, da sie mit verhältnismässig grossem konstruktivem Aufwand in die Kunststoffkonstruktion integriert werden muss.

Die Haltevorrichtung weist eine Aufnahme auf, in welcher die Lenkstange gehalten und über eine Klemmeinrichtung fixiert wird. Damit kann die Lenkstange um ihre Achse in der Aufnahme der Haltevorrichtung verdreht werden, was bei abgewinkelten Lenkstangen zu einer beschränkten Einstellmöglichkeit der Enden der Lenkstangen in Bezug auf die Gabel führt.

Die Aufgabe der vorliegenden Erfindung bestand nun darin, einen Vorbau für einen Fahrradlenker zur Aufnahme des Lenkers vorzuschlagen, der eine zuverlässige Befestigung sowie eine schnelle Verstellbarkeit des Fahrradlenkers ermöglicht.

Diese Aufgabe wird erfindungsgemäss durch einen Vorbau mit den Merkmalen nach Anspruch 1 gelöst. Weitere Ausführungsformen der Erfindung ergeben sich aus den Merkmalen der weiteren Ansprüche.

Erfindungsgemäss ist beim Vorbau für eine Fahrradgabel zur Aufnahme eines Lenkers mit einer in einem Halteorgan vorgesehenen Queröffnung zur Aufnahme des Lenkers das Halteorgan in einem Aufnahmeteil um eine Drehachse drehbar gelagert und die Queröffnung ist bezüglich der Drehachse exzentrisch angeordnet. Weiter sind Mittel zur Fixierung des Halteorgans bezüglich des Aufnahmeteils vorgesehen. Durch die exzentrische Anordnung der Queröffnung des drehbar gelagerten Halteorgans lässt sich die Position des darin aufgenommenen Lenkers in Bezug auf die Fahrradgabel einfach durch Verdrehen des Halteorgans verstellen resp. entsprechend den individuellen Bedürfnissen des Fahrers einstellen. Vorteilhaft wird dadurch die absolute Ausrichtung des Lenkers nicht beeinflusst, d.h. die Position des Lenkers kann ohne verdrehung um seine Längsachse in Bezug auf die Gabel im Verstellbereich der Exzentrizität des Halteorgans gegenüber der Gabel eingestellt werden.

Beispielsweise umfasst das Halteorgan ein erstes Schalenteil mit einer ersten inneren Umfassungsfläche und ein zweites Schalenteil mit einer zweiten inneren Umfassungsfläche, wobei das erste Schalenteil und das zweite Schalenteil lösbar miteinander verbindbar sind. Dabei definieren bei miteinander verbundenem ersten und zweiten Schalenteil die erste innere Umfassungsfläche und die zweite innere Umfassungsfläche gemeinsam die Queröffnung. Damit lassen sich entsprechend den Bedürfnissen unterschiedliche Lenker resp. Lenkstangen verwenden und auch einfach austauschen.

Beispielsweise bestehen das erste Schalenteil und/oder das zweite Schalenteil aus Kunststoff, vorzugsweise aus faserverstärktem Kunststoff. Der konstruktive Aufbau der Schalenteile erlaubt die Herstellung dieser Teile aus Kunststoff. Damit können einerseits die Teile kostengünstig in grossen Stückzahlen hergestellt werden und weisen andererseits ein sehr geringes Gewicht auf. Um bei kleinen Abmessungen auch genügende Festigkeitswerte aufzuweisen oder eine hohe Belastbarkeit zu erzielen, können die Bauteile vorteilhaft mit Fasern verstärkt werden.

Beispielsweise ist das Halteorgan von rundem Querschnitt und im Aufnahmeteil ist eine runde Lageröffnung vorgesehen, in der das Halteorgan drehbar gelagert ist. Durch diesen Aufbau wird eine einfache Verdrehbarkeit des Halteorgans bei einfachem Aufbau gewährleistet. Auch ist damit das Halteorgan zuverlässig im Vorbau gehalten und die Lenkkräfte und Abstützkräfte des Fahrers können zuverlässig auf die Gabel und den Rahmen des Fahrrades übertragen werden.

Weiter weist beispielsweise das Aufnahmeteil ein Basisteil mit einer ersten äusseren Umfassungsfläche und ein Verschlussteil mit einer zweiten äusseren Umfassungsfläche auf, wobei das Basisteil und das Verschlussteil miteinander verbindbar sind. Dabei definieren weiter im Zustand, in dem das Basisteil und das Verschlussteil miteinander verbunden sind, die erste äussere Umfassungsfläche und die zweite äussere Umfassungsfläche gemeinsam die Lageröffnung. Damit lässt sich auch einfach das Halteteil im Vorbau auswechseln, um beispielsweise einen unterschiedlichen Verstellbereich durch unterschiedliche Exzentrizität zu ermöglichen oder um ein dem Durchmesser des einzusetzenden Lenkers entsprechendes Halteteil einzusetzen. Weiter kann die Länge und Winkel der Verbindungsstelle zwischen dem Basisteil und der Gabel individuell eingestellt werden, um eine optimale, individuell auf den Fahrer ausgerichtete Positionierung des Lenkers an der Gabel zu realisieren.

Beispielsweise ist die Lageröffnung von kleinerem Durchmesser als der Durchmesser des Halterorgans, so dass bei zusammengesetztem Verschlussteil und Basisteil letzteres einen Druck auf das in der Lageröffnung sitzende Halteorgan ausübt, durch welchen Druck das Halteorgan klemmend in Bezug auf das Aufnahmeteil fixiert wird. Damit wird die Fixierung des Halteteils und damit des Lenkers einfach über eine Klemmverbindung realisiert, die einfach zu handhaben ist.

Beispielsweise ist die Queröffnung zylindrisch ausgebildet und der spitze Winkel, unter dem die Symmetrieachse der zylindrischen Queröffnung bezüglich der Drehachse angeordnet ist, liegt im Bereich zwischen 0° bis 20°.

Ausführungsbeispiele der vorliegenden Erfindung werden nachstehend anhand von Figuren noch näher erläutert. Es zeigen
Fig. 1 einen vorderen Bereich eines Fahrradrahmens mit Fahrradgabel und an dieser befestigtem erfindungsgemässem Vorbau in seitlicher Ansicht;
Fig. 2. die Anordnung gemäss Fig. 1 in der Aufsicht mit eingesetztem Lenker;
Fig. 3. die Fahrradgabel gemäss Fig. 1 in perspektivischer Darstellung;
Fig. 4 ein Basisteil in perspektivischer Darstellung;
Fig. 5 ein erstes Schalenteil einer Haltehülse in perspektivischer Darstellung;
Fig. 6 ein zweites Schalenteil der Haltehülse in perspektivischer Darstellung; und
Fig. 7 das Basisteil des erfindungsgemässen Vorbaus V in verschiedenen Positionen in seitlicher Ansicht.

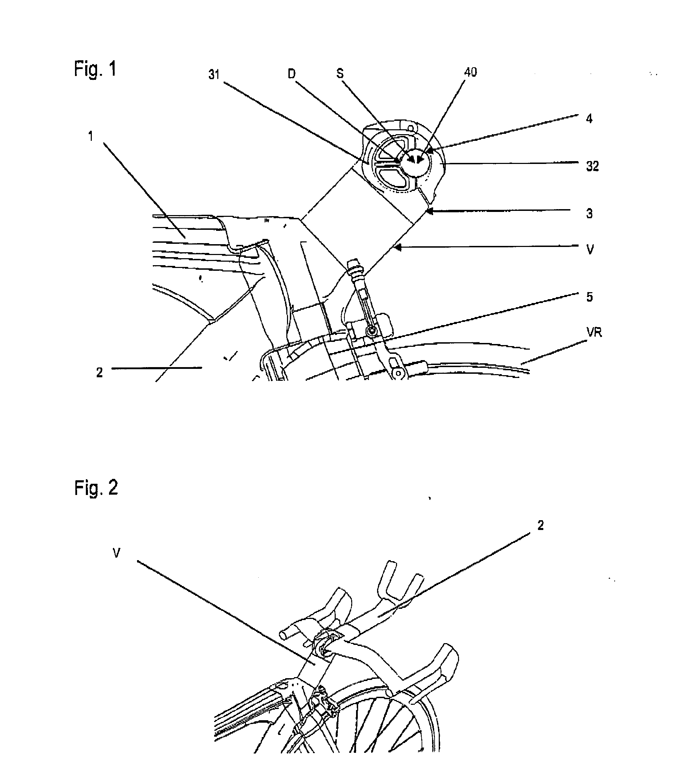

Fig. 1 zeigt einen vorderen Abschnitt eines Fahrradrahmens mit Vorderradgabel 5, an welcher der erfindungsgemässe Vorbau V vorgesehen ist. An der Stelle des Fahrradrahmens, wo ein in Längsrichtung des Fahrrades verlaufendes Oberrohr 1 und ein sich schräg nach unten erstreckendes Unterrohr 2 zusammenlaufen, ist die Vorderradgabel 5 mittels einer bekannten Scharnierverbindung um ihre Längsachse drehbar angelenkt.

Der erfindungsgemässe Vorbau V ragt von der Gabel 5 weg aufwärts nach vorne in den Raum. Der Vorbau V umfasst ein Aufnahmeteil 3, das mit einer zylindrischen Lageröffnung 30 versehen ist, in welcher eine Haltehülse 4 sitzt. Die Haltehülse 4 weist eine ebenfalls zylindrische Queröffnung 40 auf, welche zur Aufnahme eines (nicht dargestellten) Fahrradlenkers vorgesehen ist. Die Drehachse D der Haltehülse 4 und die Symmetrieachse S der Queröffnung sind zueinander parallel sowie jeweils quer zur Längserstreckung der Fahrradgabel 5 bzw. parallel zur Achse des Vorderrades VR angeordnet. Die Queröffnung 40 ist bezüglich der Drehachse D der Haltehülse 4 exzentrisch angeordnet, d.h. die Drehachse D der Haltehülse 4 und die Symmetrieachse S der Queröffnung 40 sind im Abstand zueinander angeordnet. Das Aufnahmeteil 3 umfasst ein Basisteil 31 und einen Verschlussbügel 32. In seiner in Fig. 1 gezeigten Verschlussposition ist der Verschlussbügel 32 mit seinem freien Längsende mittels einer Schraubverbindung an dem Basisteil 31 befestigt.

Zum Öffnen des Verschlussbügels 32 löst man diese Schraubverbindung, worauf sich der Verschlussbügel 32 vom Basisteil 31 weg nach aussen abheben lässt. Vorteilhaft ist der Verschlussbügel 32 mit einem Schwenkscharnier mit dem Basisteil 31 verbunden, so dass der Verschlussbügel 32 zur Aufnahme der Haltehülse vom Basisteil 31 weg verschwenkt werden kann, beispielsweise nach oben.

Die Haltehülse 4 besteht aus einem ersten Schalenteil 41 und einem zweiten Schalenteil 42, welche zusammensetzbar sind. Das Basisteil 31 ist mit der Fahrradgabel 5 fest verbindbar, beispielsweise durch Verleimen oder durch Einstecken und Verklemmen.

Fig. 2 zeigt die Aufsicht auf den vorderen Bereich eines Fahrrades mit montiertem, erfindungsgemässen Vorbau V mit eingesetztem Lenker 2. Der Lenker 2 ist in bekannter Bauart mit mehreren Griffstangen ausgestattet.

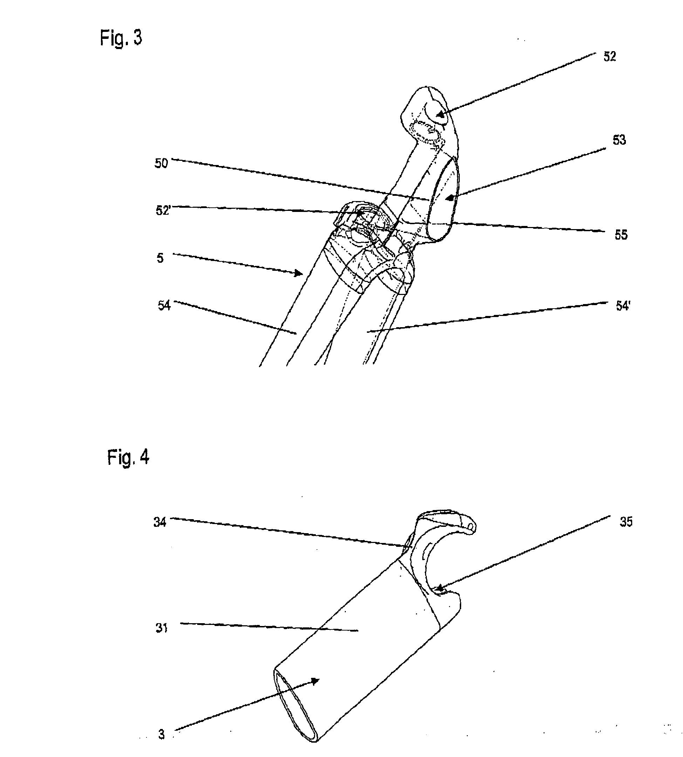

Fig. 3 zeigt einen oberen Bereich der Fahrradgabel 5, die einen Befestigungsabschnitt 50 aufweist von dem sich zwei im Abstand zueinander angeordnete Gabelstreben 54, 54' nach unten erstrecken. Am oberen und am unteren Ende des Befestigungsabschnitt 50 sind zwei Buchsen 52, 52' mit durchgehender Öffnung angeformt. Beide Buchsen resp. Öffnungen sind zueinander fluchtend angeordnet. Ein (nicht dargestellter) Bolzen durchgreift bei montierter Gabel 5 die beiden Buchsen 52, 52' und einen zwischen den beiden ersten 52, 52' angeordneten Rohrkanal in einem Schaft des Fahrradrahmens.

Der Befestigungsabschnitt 50 ist mit einer zur Aufnahme des Vorbaus V bestimmten Befestigungsöffnung 53 von ovalem resp. tropfenförmigem Querschnitt versehen. Von der nach vorne weisenden Seite des Befestigungsabschnitts 50 ragt eine rahmenartig um die Befestigungsöffnung 53 angeordnete Haltekante 55 nach Aussen in den Raum.

Fig. 4 zeigt das Basisteil 31 des Aufnahmeteils 3, das einen rohrförmigen Anschlussabschnitt 33 mit flachem, ovalem resp. tropfenförmigem Querschnitt aufweist, der dem Querschnitt der Befestigungsöffnung 53 entspricht. Am Basisteil 31 setzt ein Umfassungsabschnitt 34 an, der eine halbkreisförmig gekrümmte, nach aussen geöffnete erste äussere Umfassungsfläche 35 aufweist, die einen ersten Abschnitt einer äusseren Umfangswand darstellt, welche die zylindrische Öffnung für die Lagerhülse 40 in radialer Richtung begrenzt. Das Basisteil 31 ist vorzugsweise aus faserverstärktem Kunststoff hergestellt, welcher einen leichten und besonders stabilen Aufbau erlaubt.

Bereits Figur 1 zeigt den kreisbogenförmig gekrümmten Verschlussbügel 32 des Aufnahmeteils 3 in perspektivischer Darstellung. Die halbkreisförmig gekrümmte zweite äussere Umfassungsfläche bildet gemeinsam mit der am Basisteil 31 vorgesehenen ersten ausseren Umfassungsfläche 35 bei geschlossenem Verschlussbügels 32 die äussere Umfangswand, welche die zylindrische Öffnung für die Lagerhülse 40 in radialer Richtung nach aussen begrenzt. An einem Längsende des Verschlussbügels sind beispielsweise im Abstand zueinander zwei zylindrische Buchsen angeordnet, die quer zur Längserstreckung des Verschlussbügels 32 liegen und deren zwei Buchsenöffnungen parallel zueinander angeordnet sind.

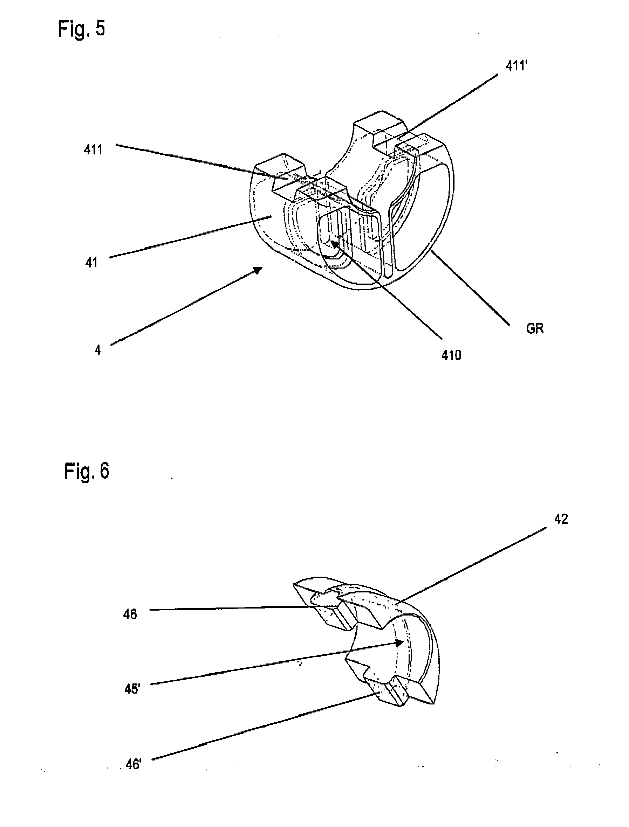

Fig. 5 zeigt das erste Schalenteil 41 der Haltehülse 4 in perspektivischer Darstellung. Das erste Schalenteil 41 hat einen teilzylindrischen Grundkörper GR von kreissegmentförmigem Querschnitt, in dem Aussparungen 410 vorgesehen sind, die zur Material- und Gewichtsersparnis beitragen. Die nach aussen geöffneten Aufnahmenuten 411, 411' von u-förmigem Querschnitt dienen der Aufnahme von in Fig. 6 beschriebenen Verbindungsstegen 46, 46'. Eine ebenfalls nach aussen geöffnete, halbkreisförmig gekrümmte erste innere Umfassungsfläche 45 stellt einen Abschnitt einer inneren Umfangswand dar, die bei zusammengesetzten ersten und zweiten Schalenteilen 41, 42 die zylindrische Queröffnung 40 in radialer Richtung nach aussen begrenzt.

Fig. 6 zeigt das zweite Schalenteil 42 in perspektivischer Darstellung, welches eine halbkreisförmig gekrümmte zweite innere Umfassungsfläche 45' besitzt, die bei zusammengefügtem ersten und zweiten Schalenteil 41, 42 gemeinsam mit der ersten inneren Umfassungsfläche 45 am ersten Schalenteil 41 die innere Umfangswand bildet, welche die Queröffnung 40 in radialer Richtung nach aussen begrenzt. Die spiegelsymmetrisch zueinander angeordneten verbindungsstege 46, 46', welche von den das zweite Schalenteil 42 in Längsrichtung begrenzenden Flächen abstehen, dienen der Verbindung zwischen erstem und zweitem Schalenteil 41, 42.

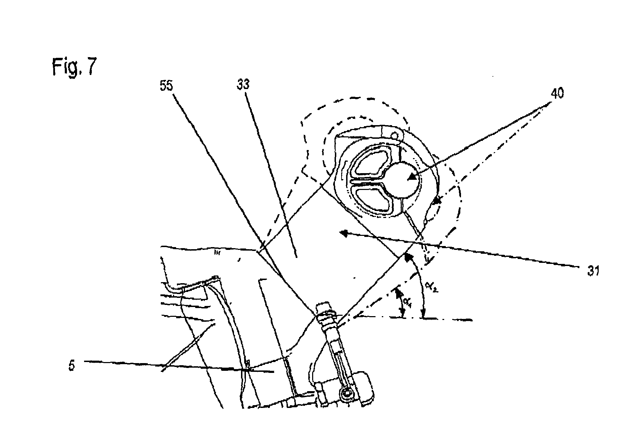

Fig. 7 zeigt das Basisteil 31 des erfindungsgemässen Vorbaus V in drei verschiedenen Positionen (normal, gestrichelt oder strich-punktiert dargestellt). Das Basisteil 31 wird beispielsweise durch Kleben an der Fahrradgabel 5 befestigt. Hierzu fügt man das Anschlussteil 33 in die von der Haltekante 55 begrenzten Befestigungsöffnung 53 und klebt das Anschlussteil 33 an den Innenseiten der Haltekante 55 fest. Die Haltekante 55 und das Anschlussteil 33 sind so geformt, dass sich letzteres unter individuell wählbaren Neigungswinkeln αl, α2 zur Längsachse des Fahrrads in die Befestigungsöffnung 53 einbringen und an der Gabel 5 befestigen lässt. Auch lässt sich dadurch die Länge resp. Position der Queröffnung 40 in Bezug zur Gabel 5 einstellen resp. den individuellen Bedürfnissen des Fahrers einstellen.

Im Folgenden wird unter Bezugnahme auf die vorstehend beschriebenen Figuren die Montage eines Fahrradlenkers 2 am erfindungsgemässen Vorbau V sowie die Funktionsweise des Vorbaus erläutert:

Die zwischen zwei oder mehreren Haltegriffen angeordnete Querstange eines Fahrradlenkers 2 wird derart zwischen das erste Schalenteil 41 und das zweite Schalenteil 42 gefügt, dass die erste innere Umfassungsfläche 45 und die zweite innere Umfassungsfläche 45' die Querstange gemeinsam umfassen. Anschliessend werden erstes und zweites Schalenteil 41, 42 miteinander verbunden, indem man die Verbindungsstege 46, 46' am zweiten Schalenteil 42 fest in die Aufnahmenuten 411, 411' des ersten Schalenteils 41 presst, so dass eine lösbare Steckverbindung zwischen den Verbindungsstegen 46, 46' und den Aufnahmenuten 411, 411' gebildet wird. Die Querstange durchgreift nun die zwischen der ersten inneren Umfassungsfläche 45 und der zweiten inneren Umfassungsfläche 45' gebildete zylindrische Queröffnung 40 in axialer Richtung.

Die Haltehülse 4 wird anschliessend mit dem darin aufgenommenen Lenker 2 in die Lageröffnung 30 des an der Fahrradgabel 5 befestigten Aufnahmeteils 3 eingesetzt. Hierzu wird die Haltehülse 4 zwischen die erste äussere Umfassungsfläche 35 des Basisteils 31 und die zweite äussere Umfassungsfläche 35' des Verschlussbügels 32 gefügt und anschliessend der Verschlussbügel 32 geschlossen. Der Durchmesser der Haltehülse 4 ist etwas grösser bemessen als der Durchmesser der Lageröffnung 30, so dass beim Schliessen des Verschlussbügels 32 letzterer die Haltehülse 4 gegen die die Lageröffnung 30 begrenzende äussere Umfassungswand presst, wodurch zum einen die Haltehülse 4 in der Lageröffnung 30 und zum anderen die Querstange in der Queröffnung 40 klemmend in Bezug auf das Aufnahmeteil 3 fixiert werden. Zur Verstellung des Lenkers 2 öffnet resp. löst man den Verschlussbügel 32, wonach die Haltehülse 4 um ihre Achse gedreht werden und in beliebig wählbarer Position in der Lageröffnung 30 festgeklemmt werden kann. Bei der Drehung der Haltehülse 4 um ihre Achse bewegt sich die Querstange des Lenkers 2 auf einer Kreisbahn um die Achse der Haltehülse 4, wobei der Durchmesser der Kreisbahn der doppelten Exzentrizität, also des Abstandes der Mittelpunkte von Lageröffnung 30 und Queröffnung 40, entspricht. Mithin ist der Lenker 2 durch den erfindungsgemässen Vorbau V in beliebiger Richtung (z.B. in horizontaler und vertikaler Richtung) innerhalb einer Strecke verstellbar die dem doppelten der Exzentrizität entspricht.

## Patentansprüche

1. Vorbau für eine Fahrradgabel zur Aufnahme eines Lenkers (2) mit einer in einem Halteorgan (4) vorgesehenen Queröffnung (40) zur Aufnahme des Lenkers (2), **dadurch gekennzeichnet, dass** das Halteorgan (4) in einem Aufnahmeteil (3) um eine Drehachse (D) drehbar gelagert ist, dass die Queröffnung (40) bezüglich der Drehachse (D) exzentrisch angeordnet ist und dass Mittel zur Fixierung des Halteorgans (4) bezüglich des Aufnahmeteils (3) vorgesehen sind.

2. Vorbau nach Anspruch 1, **dadurch gekennzeichnet, dass** das Halteorgan (4) ein erstes Schalenteil (41) mit einer ersten inneren Umfassungsfläche (45) und ein zweites Schalenteil (42) mit einer zweiten inneren Umfassungsfläche (45') umfasst, wobei das erste Schalenteil (41) und das zweite Schalenteil (42) lösbar miteinander verbindbar sind und wobei bei miteinander verbundenem ersten und zweiten Schalenteil die erste innere Umfassungsfläche (45) und die zweite innere Umfassungsfläche (45) gemeinsam die Queröffnung (40) definieren.

3. Vorbau nach Anspruch 2, **dadurch gekennzeichnet, dass** das erste Schalenteil (41) und/oder das zweite Schalenteil (42) aus Kunststoff besteht, vorzugsweise aus faserverstärktem Kunststoff.

4. Vorbau nach einem der Ansprüche 1 bis 3, **dadurch gekennzeichnet, dass** das Halteorgan (4) von rundem Querschnitt ist und im Aufnahmeteil eine runde Lageröffnung (30) vorgesehen ist, in der das Halteorgan (4) drehbar gelagert ist.

5. Vorbau nach Anspruch 4, **dadurch gekennzeichnet, dass** das Aufnahmeteil (3) ein Basisteil (31) mit einer ersten äusseren Umfassungsfläche (35) und ein Verschlussteil (33) mit einer zweiten äusseren Umfassungsfläche (35') aufweist, wobei das Basisteil (31) und das Verschlussteil (32) miteinander verbindbar sind und wobei im Zustand, in dem das Basisteil (31) und das Verschlussteil (32) miteinander verbunden sind, die erste äussere Umfassungsfläche (35) und die zweite äussere Umfassungsfläche (35') gemeinsam die Lageröffnung (30) definieren.

6. Vorbau nach Anspruch 5, **dadurch gekennzeichnet, dass** die Lageröffnung (40) von kleinerem Durchmesser als der Durchmesser des Halterorgans ist, so dass bei zusammengesetztem Verschlussteil (32) und Basisteil (31) letzteres einen Druck auf das in der Lageröffnung (40) sitzende Halteorgan (4) ausübt, durch welchen Druck das Halteorgan (4) klemmend in Bezug auf das Aufnahmeteil (3) fixiert wird.

7. Vorbau nach einem der Ansprüche 1 bis 6, **dadurch gekennzeichnet, dass** die Queröffnung (40) zylindrisch ausgebildet ist und dass der spitze Winkel unter dem die Symmetrieachse (S) der zylindrischen Queröffnung bezüglich der Drehachse (D) angeordnet ist im Bereich zwischen 0° bis 20° liegt.
